# EUROPEAN PATENT APPLICATION

(11) **EP 2 241 978 A1**
(43) Date of publication of application: **20.10.2010**
(21) Application number: 10250760.5
(22) Date of filing: 13.04.2010
(51) Int. Cl.: G06F 13/24

(54) **Computer system, interrupt relay circuit and interrupt relay method**

(30) Priority: 14.04.2009 JP 2009097587
(71) Applicant: Hitachi, Ltd., Chiyoda-ku Tokyo 100-8280 (JP)
(72) Inventor: Hayakawa, Norimitsu, Tokyo 100-8280 (JP); Moriki, Toshiomi, Tokyo 100-8280 (JP); Tsushima, Yuji, Tokyo 100-8280 (JP); Hattori, Naoya, Tokyo 100-8280 (JP)
(74) Representative: Calderbank, Thomas Roger

(57) **Abstract**

A method for making it possible for a virtualization software (VMM) to generally identify a PCI function of an interrupt requester presupposing the existing I/O devices based on the PCI express is provided. An interrupt relay circuit (140a) is provided between an I/O device (142a) based on the PCI express and a PCI express bridge (128a). The interrupt relay circuit (140a) receives and relays an interrupt transaction issued by the I/O device, and records whether there is an interrupt request in an interrupt indicator (134) in association with an interrupt identifier (328a). A VMM 114 uniquely identifies an I/O device of interrupt requester by referring to the interrupt indicator (134).

## Description

The present invention relates to a computer system, and in particular to a computer system, an interrupt relay circuit and an interrupt relay method having a function of providing a virtual computer.

In recent information systems, a large number of IA servers each having a CPU based upon IA-32 (Intel Architecture 32) of *Intel* mounted thereon have been introduced. Because of management of a large number of IA servers, operation management costs such as labor costs of maintenance personnel and electric charges increase in enterprises, resulting in problems. Therefore, server unification using virtualization software (VMM: Virtual Machine Monitor) is drawing attention.

The VMM generates a plurality of virtual server environments on physically one IA server. The virtual server environment is referred to as virtual server (VM: Virtual Machine). If the VMM is used, it is possible to operate an OS and applications which have operated in the conventional servers on one VM intactly, reduce the number of servers included in an information system, and solve the problem.

The VMM plays a role of dividing CPUs, memories and I/O devices, which are resources on a physical server, into a plurality of subsets and assign the subsets to VMs. In the case of resources accessed from a CPU, a method of assigning by using a virtualization assisting mechanism such as VT-x (Virtualization Technology for Xeon, "Intel (R) 64 and IA-32 Architectures Software Developer's Manual, Volume 3B: System Programming Guide", Nov. 2008, chapter 19 "INTRODUCTION TO VIRTUAL-MACHINE EXTENSIONS") mounted on an IA-32 CPU is known.

On the other hand, as for resource access from an I/O device, two kinds, i.e., direct memory access (DMA) and interrupt transaction are known. The control method differs according to the kind. In the case of DMA, a method of transferring access to a memory region of a corresponding VM by using an address modification function of the DMA as described in JP-A-2004-220218 and "Intel (R) Virtualization Technology for Directed I/O" Architecture Specification, Sep. 2008, vptech/Intel(r)_VT_for_Direct_IO.pdf, chapter 1 "Introduction" is known. On the other hand, in the case of interrupt transactions, a method of assigning unique vector numbers to I/O devices in a system and distributing interrupts according to the vector numbers as described in JP-A-2006-209386 is known.

In I/O devices in recent years, however, wideband I/O interfaces represented by, for example, PCI express have become the mainstream. Furthermore, as the semiconductor technology advances, chips each having a plurality of PCI functions integrated on the same PCI device are being used widely. In IA servers mounting these I/O devices, I/O devices are assigned to different VMs by taking a PCI function as the unit in many cases. As the number of integrated PCI functions increases, problems described hereafter are being actualized.
(a) In the case of a computer system using an INTx message, which is an interrupt mechanism of a legacy, only four interrupt lines at maximum per PCI system can be distinguished. Since only one vector can be set on the same interrupt line, the vector is shared among PC functions on different PCI cards. As a result, an I/O device of an interrupt requester cannot be identified uniquely and interrupt distribution becomes impossible.
(b) A computer system using the MSI (Message Signaled Interrupt), which is a new interrupt scheme, and MSI-X, which is expanded specifications, has a configuration that software (interrupt handler) which processes an interrupt is notified of only an interrupt vector number and an interrupter requester ID is not transferred to the software (interrupt handler). Therefore, interrupt causes which can be distinguished by the VMM which is software are limited up to the product of the number of CPU cores mounted on the computer system and the vector number (8 bits). However, up to a maximum of 2,048 MSI vectors corresponding to interrupt causes can be specified per PCI function. If the quantity of mounted PCI cards increases, therefore, conversely the product of the number of CPU cores and the number of vectors on the reception side is exceeded. In the present situation, setting duplicates between MSI vector entries. Therefore, the I/O device of the interrupt requester and the MSI vector entry cannot be identified uniquely and the interrupt distribution becomes impossible.

Therefore, the conventional VMM copes with I/O devices individually. In other words, while permitting duplication of an interrupt vector between PCI functions, the conventional VMM reads out an interrupt cause register within an I/O device at the time of interrupt reception and identifies a PCI function which has requested an interrupt and an MSI vector entry uniquely.

In this method, however, it is necessary for the VMM to conduct individual processing for each I/O device, and the labor for developing the VMM becomes enormous. Therefore, this method has a drawback that only a small part of I/O devices among PCI express cards circulating widely in the market can be supported. Therefore, a general-purpose method which identifies an interrupt requester irrespective of the kind of an I/O device is desirable.

As one of general-purpose methods for identifying an interrupt requester, a method disclosed in JP-A-9-212447 is known. In a configuration disclosed in JP-A-9-212447, interrupt state registers are retained to indicate drive states of interrupt lines in association with a plurality of interrupt lines which are driven from a plurality of input/output functions mounted on a PCMCIA card, and the interrupt state registers can be read out from software. As another method, a method disclosed in US2006/0047877 is known. In this method, a specific memory region is assigned to a device, and an I/O device writes an interrupt situation and the interrupt situation is read out from the CPU side. In addition, a method for changing information of an interrupt transaction issued by an I/O device presupposing an MSI interrupt is disclosed in US2008/0162762.

However, the method disclosed in JP-A-9-212447 is premised on a configuration in which interrupt lines are driven individually from a plurality of PCI devices. It is difficult to apply this method to the case where a plurality of PCI functions are integrated within the same I/O chip. In the method disclosed in US2006/0047877, memory address information of write destination is retained within an interrupt message issued by an I/O device, and consequently the existing PCI express device and IA-32 CPU cannot be utilized as they are. In addition, the method disclosed in US2008/0162762 has a drawback that it cannot be applied to a system using an INTx interrupt of a legacy and a large amount of MSI-X vector entries exceeding the number of CPU cores cannot be distinguished from each other.

Therefore, a preferred aim of the present invention is to provide a method for generally identifying a PCI function of an interrupt requester presupposing the existing I/O devices based on the PCI express.

In accordance with the present invention, in a computer system including at least one CPU, a memory, and at least one I/O device, a relay circuit receives a first interrupt transaction issued by the I/O device, acquires an identifier which identifies an issuer on the basis of the first interrupt transaction, updates an interrupt indicator corresponding to the identifier, and sends a second interrupt transaction to the CPU.

The computer system further has a function of executing at least one virtual machine (VM) and a virtual machine monitor (VMM) which controls the virtual machine. The interrupt relay method further includes validating an interrupt of the I/O device, accepting the second interrupt transaction, referring to the interrupt indicator, identifying an issuer of the first interrupt transaction, and distributing the interrupt to one of the VMs.

According to a procedure of the present invention, it is made possible to give a notice of an interrupt requester identifier to an interrupt handler of the VMM in addition to a vector number in the conventional interrupt transfer method. As for the identifier, unique values can be assigned to I/O devices regardless of the number of CPU cores mounted on the computer system. Therefore, the VMM can distinguish the interrupt issuer uniquely. The present procedure can be applied to I/O devices based on the PCI express and it is useful.

Other objects, features and advantages of the invention will become apparent from the following description of the embodiments of the invention taken in conjunction with the accompanying drawings.

In the drawings
FIG 1 is a block diagram of a computer system according to a first embodiment of the present invention;
FIG 2A is a block diagram of an interrupt relay circuit installed between an I/O device and a PCI express bridge in the first embodiment;
FIG 2B is a block diagram showing a configuration of an identifier acquisition unit included in the interrupt relay circuit in the first embodiment;
FIG 2C is a block diagram showing a configuration of an interrupt sending unit included in the interrupt relay circuit in the first embodiment;
FIG 3 is a configuration diagram showing an internal format of an interrupt indicator secured on a memory in the first embodiment;
FIG 4 is a configuration diagram showing a format of an INx message prescribed by PCI express which is included in an interrupt transaction received by the interrupt relay circuit;
FIG 5 is a configuration diagram showing a format of an MSI (Message Signaled Interrupt) transaction prescribed by the PCI express which is included in the interrupt transaction received by the interrupt relay circuit;
FIG 6 is a configuration diagram showing a setting example of an MSI-X vector table included in an I/O device in the first embodiment;
FIG 7A is a block diagram showing a configuration of a virtual machine monitor (VMM) which operates in the computer system according to the first embodiment;
FIG 7B is a configuration diagram showing a setting example of I/O device control information retained by the VMM;
FIG 8A is a flow chart showing an example of processing conducted when the interrupt relay circuit has received an interrupt transaction issued by an I/O device in the first embodiment;
FIG 8B is a flow chart showing an example of processing conducted by the VMM in response to reception of the interrupt transaction issued by the interrupt relay circuit in a CPU in the first embodiment;
FIG 8C is a flow chart showing an example of processing conducted by an interrupt indicator processing unit within the VMM in the first embodiment;
FIG 9 is a flow chart showing an example of initialization processing conducted by the VMM in the first embodiment;
FIG 10 is a block diagram of a computer system according to a second embodiment in which an interrupt indicator is incorporated in the interrupt relay circuit; and
FIG 11 is a block diagram of the interrupt relay circuit incorporating the interrupt indicator in the second embodiment.

Hereafter, embodiments of the present invention will be described with reference to the accompanying drawings.

### (First Embodiment)

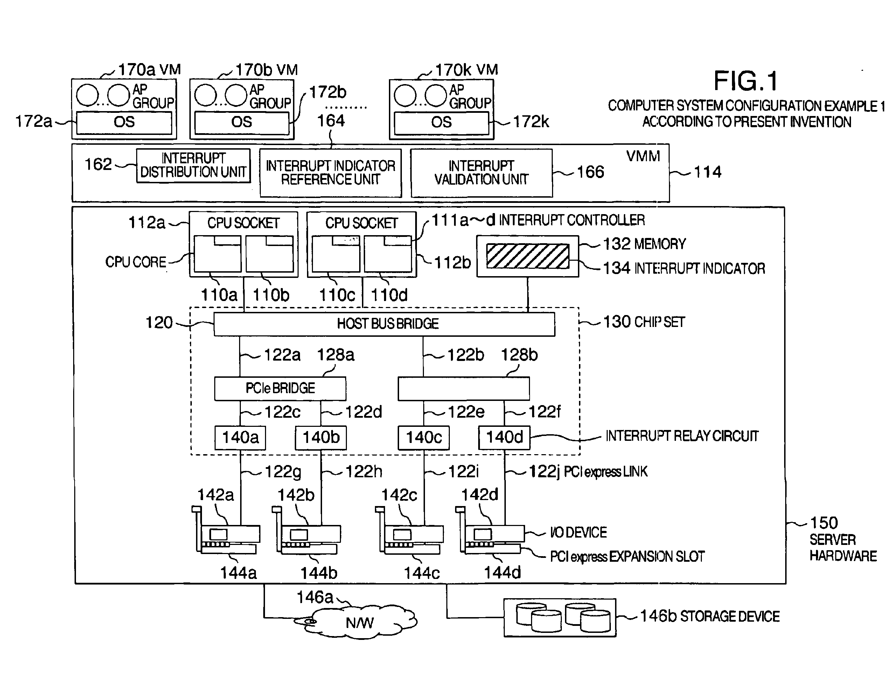

FIG 1 is a block diagram showing a configuration of a computer system according to a first embodiment of the present invention. As external devices, N/W (network) 146a and a storage device 146b are connected to server hardware 150. Within the server hardware 150, a plurality of CPU cores 110a to 110d, a plurality of I/O devices 142a to 142d, and a memory 132 are connected to each other via a chip set 130. The CPU core 110a includes an interrupt controller 111a within it, and the CPU core 110a is adapted to be able to receive an interrupt transaction Tx issued by an I/O device.

In the chip set 130, a host bus bridge 120 connects CPU sockets 112a and 112b to a total of two PCI express (PCIe) links 122a and 122b. In addition, PCIe bridges 128a and 128b branch the PCIe links 122a and 122b into two branches, respectively and form four PCIe links 122c to 122f. Interrupt relay circuits 140a to 140d are connected to terminal PCIe ports included in the chip set. The interrupt relay circuits 140a to 140d play a role of receiving an interrupt Tx issued from an I/O device and relaying the interrupt Tx to the higher order PCIe bridges 128a and 128b and host bus bridge 120.

PCI express expansion slots 144a to 144d are mounted on end points of a PCIe tree via PCI express links 122g to 122j. The I/O devices 142a to 142d are mounted on the PCI express expansion slots 144a to 144d, respectively.

The configuration of the chip set is not restricted to the configuration shown in FIG. 1. For example, a configuration having two PCI express links per host bridge 120 is shown in FIG 1. However, the configuration may have one PCI express link or at least three PCI express links per host bridge 120. The same is true of the PCIe bridges 128a and 128b as well. Furthermore, an example in which the PCI express expansion slots 144a to 144d are mounted is shown in FIG 1 from the viewpoint of facilitation of understanding. However, the present invention can also be applied to I/O devices having no expansion slots mounted thereon, such as on-board PCI express devices in the same way. These variations are within the scope of the imagination for those skilled in the art, and are incorporated in the present invention.

An interrupt indicator 134 which will be described later is stored on the memory 132. The interrupt indicator has a data structure which retains a reception situation of an interrupt Tx conducted by the interrupt relay circuits 140a to 140d. The interrupt indicator is accessed from the interrupt relay circuits 140a to 140d and the CPU cores 110a to 110d.

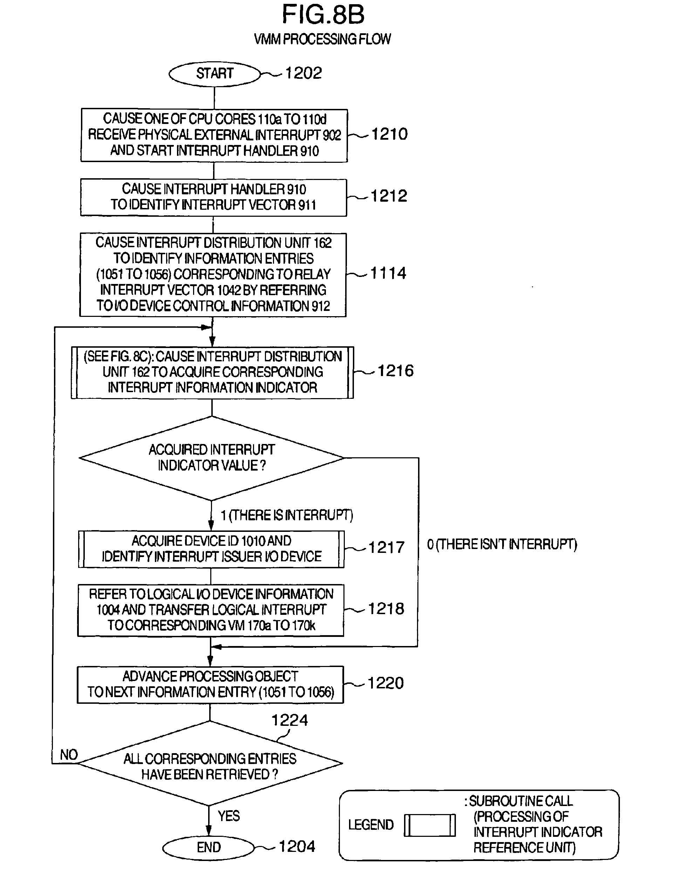

One VMM 114 and a plurality of virtual machines (VMs) 170a to 170k operate on the server hardware 150. The VMM 114 is firmware which controls the server hardware 150. In response to an interrupt received by the interrupt controllers 111a to 111d, an interrupt distribution unit 162, an interrupt indicator reference unit 164, and an interrupt validation unit 166 operate in collaboration to transfer the interrupt to one of the VMs. The interrupt transfer processing conducted by the VMM 114 will be described later with reference to FIG 8B. A single OS (172a to 172k) and a group of a plurality of applications (AP group in FIG 1) operate on each of the VMs 170a to 170k.

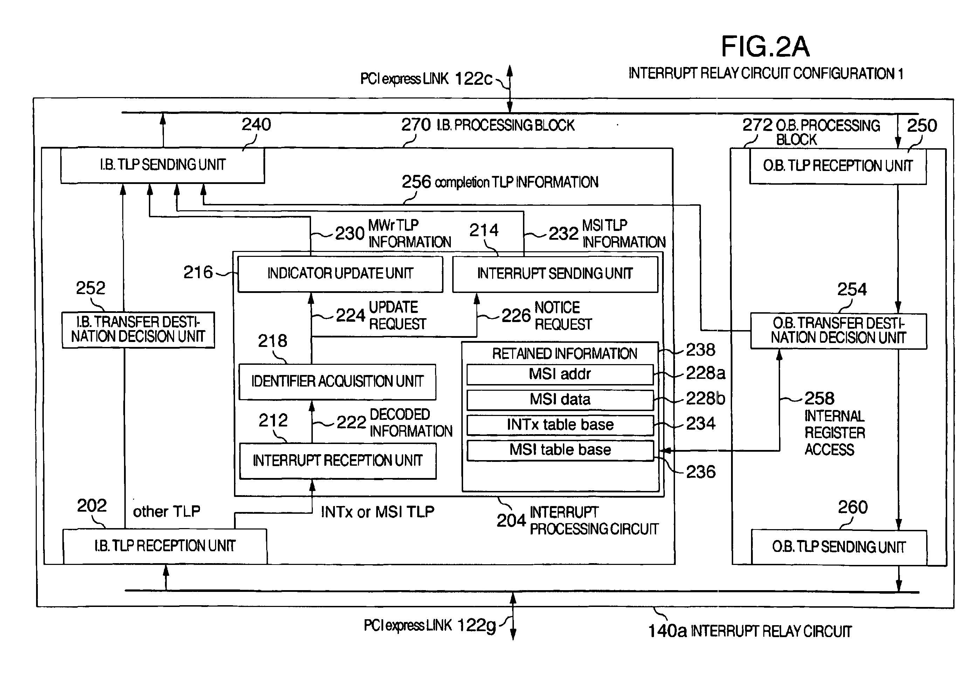

FIG 2A shows a configuration diagram of the interrupt relay circuit 140. The interrupt relay circuit 140 is connected to the external via one pair of PCI express links 122c and 122g. For avoiding complication of the drawing and facilitating the appreciation, the configuration is shown in FIG 2A, paying attention to the interrupt transfer which is the prime object of the present invention. Processing of physical link layers and logical link layers prescribed by the PCI express standards and queue control of Tx in a Tx layer are not illustrated. However, a method for executing peripheral function which are not illustrated is within a scope that those skilled in the art can easily imagine.

The interrupt relay circuit 140a is broadly divided into two blocks, i.e., an I.B. processing block 270 which conducts Tx processing in an inbound direction directed from 122g to 122c and an O.B. processing block 272 which conducts Tx processing in an outbound direction directed from 122c to 122g.

An I.B. TLP (Transaction Layer Packet) reception unit 202 in the I.B. processing block 270 receives Tx issued by the I/O device 142a, via the PCI express link 122g. Processing conducted in the subsequent stage differs depending upon the kind of the received TLP. In the case of an INTx message or an MSI TLP which is an interrupt transaction, processing is conducted in an interrupt processing circuit 204. In the case of other transactions, processing is conducted in an I.B. transfer destination decision unit 252. Address-based or ID-based Tx transfer which has been conducted in the conventional PCI express bridge is conducted in the I.B. transfer destination decision unit 252. Since the address-based or ID-based Tx transfer is known, it will not be described in detail in the present embodiment.

The interrupt processing circuit 204 includes processing subblocks such as an interrupt reception unit 212, an identifier acquisition unit 218, an indicator update unit 216 and an interrupt sending unit 214, and retained information 238 having retained data accessed from these processing subblocks.

The interrupt reception unit 212 receives an INTx message or an MSI TLP as a first interrupt transaction, conducts decode processing, and gives a notice of decoded information 222 to the identifier acquisition unit 218 in the subsequent stage. Although the decoded information 222 will not be described in detail on account of space consideration, the decoded information 222 includes, for example, a distinction between the INTx message and the MSI TLP, fields in a TLP header, and a part of a data payload.

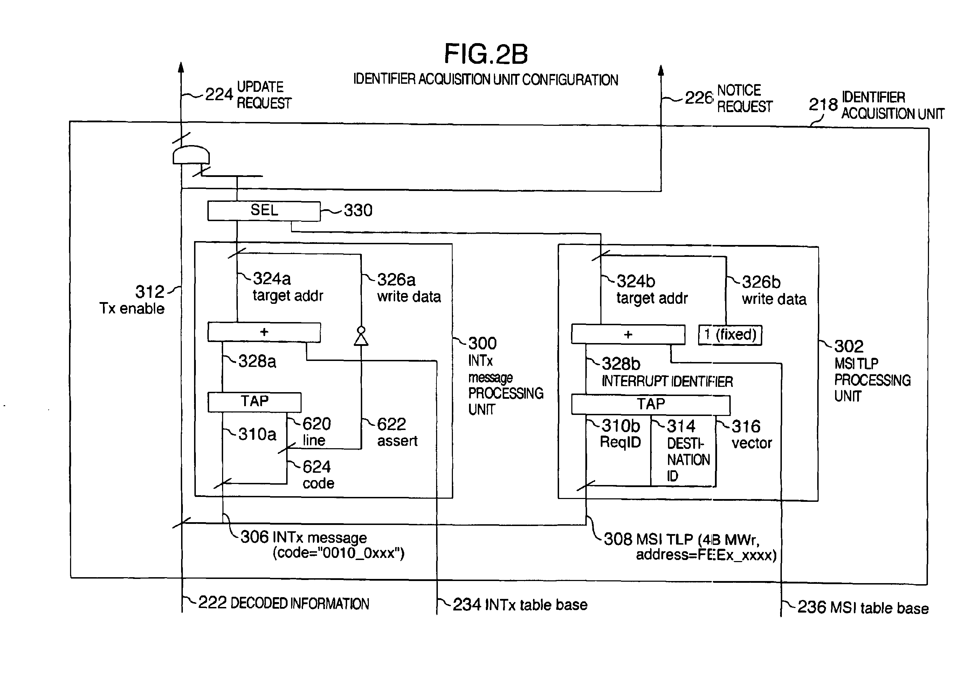

The identifier acquisition unit 218 issues an update request 224 and a notice request 226 on the basis of the received decoded information. Details of the identifier acquisition unit 218 will be described with reference to FIG 2B.

The indicator update unit 216 exercises issuance control of a memory write request (MWr TLP) for updating the interrupt indicator 134. An address of update destination and data information are obtained from the update request 224.

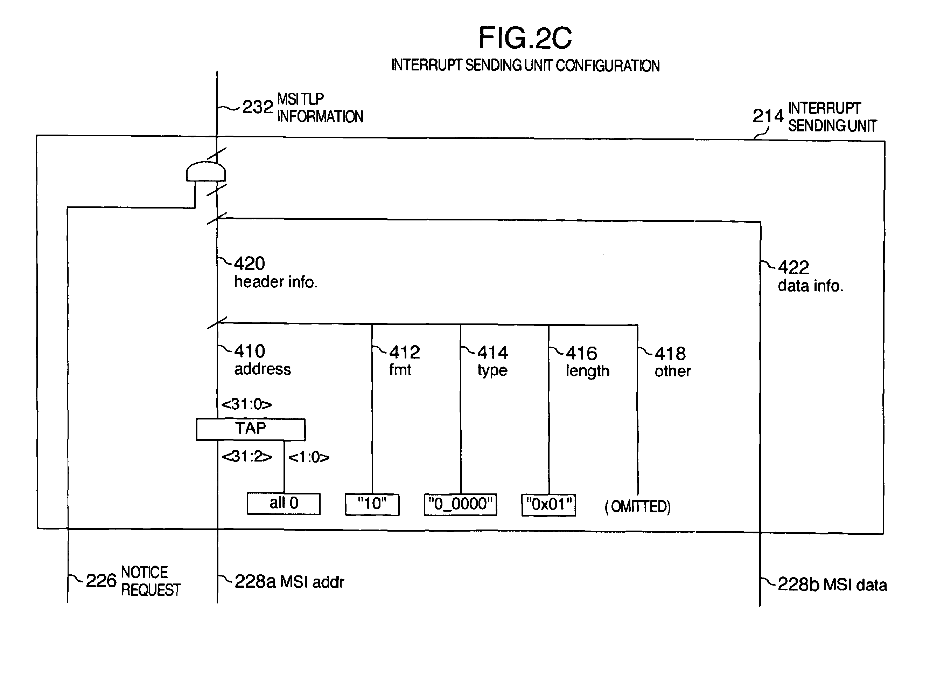

The interrupt sending unit 214 receives the notice request 226, and exercises issuance control of a second interrupt transaction (MSI TLP) on a CPU. Details of this subblock will be described with reference to FIG 2C.

The retained information 238 retains an INTx table base 234 and an MSI table base 236 as information concerning indicator update, and an MSI addr 228a and MSI data 228b as information concerning issuance of an interrupt Tx. Uses of respective kinds of information will be described later with reference to FIGS. 2B and 2C.

MWr TLP information 230 which update the interrupt indicator and MSI TLP information 232 are asserted from the interrupt processing circuit 204. An I.B. TLP sending unit 240 arbitrates TLP information sent from the I.B. transfer destination decision unit 252, completion TLP information 256 besides the MWr TLP information 230 and the MSI TLP information 232, generates a TLP based on the PCI express, and sends the TLP to the PCI express link 122c.

On the other hand, an O.B. transfer destination decision unit 254 in the O.B. processing block 272 determines a transfer destination of a TLP received by an O.B. TLP reception unit 250. If the present processing is a read/write access to the retained information 238, reference/update is conducted via an internal register access 258 and a response is controlled by the completion TLP information 256. As for whether the access is to the retained information 238, for example, an implementation example in which the access is regarded as an access to the retained information 23S in the case where the TLP is a TLP of type 0 form in a PCI configuration Tx and the device number and the function number coincide is conceivable. As another implementation method, an implementation example in which the retained information 238 is implemented as a memory mapped I/O (MMIO) register and address information in a TLP is decoded to make a decision is also conceivable. In this way, there are some variations in the method for implementing the O.B. transfer destination decision unit 254. However, they are in the scope those skilled in the art can analogize easily.

A TLP other than the above-described TLP is transferred to an O.B. TLP sending unit 260, and sent out from the PCI express link 122g.

FIG 2B shows details of the identifier acquisition unit 218. The present processing subblock calculates an interrupt identifier (328a, 328b) for identifying an issuer of an interrupt Tx, in accordance with the distinction between the INTx message and the MSI TLP. The identifier acquisition unit 218 calculates an address of an interrupt indicator of an update object on the basis of the 328a/b interrupt identifier.

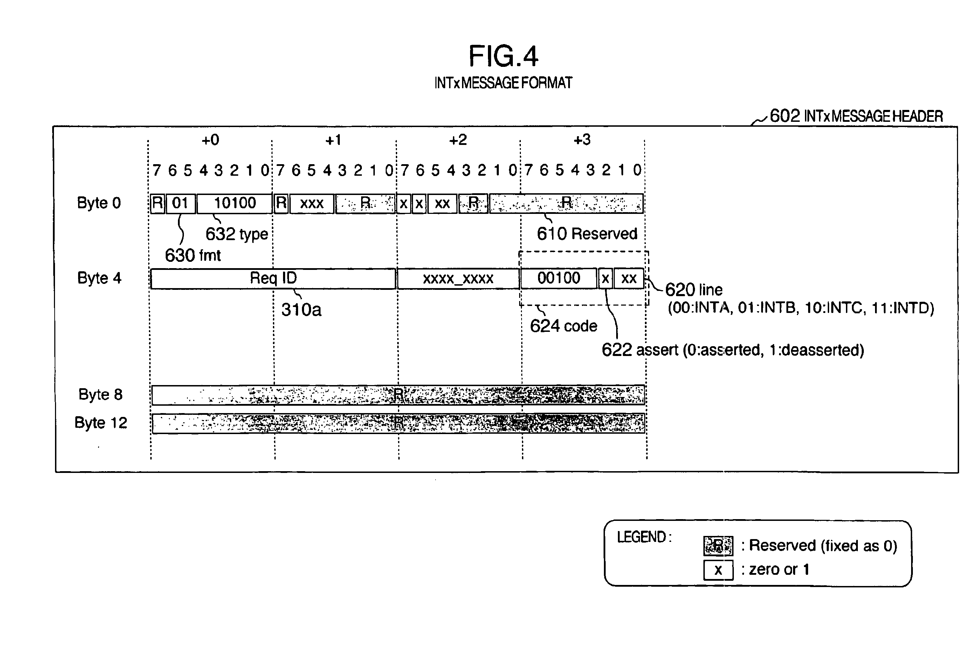

First, contents of processing conducted by an INTx message processing unit 300 will now be described. The INTx message processing unit 300 acquires a Req ID 310a and a code 624 from a header of an INTx message. An INTx message format is shown in FIG 4. The code 624 is formed of a total of 8 bits. Line information 620 is encoded in a bit <1 to 0> part and assert information is encoded in a bit 2 part. The line information 620 indicates which of INTA/B/C/D of a virtual interrupt wire is asserted/deasserted by a device of the interrupt requester. Assert information 622 indicates "assert" by 0 and indicates "deassert" by "1."

The interrupt identifier 328a is generated by using the Req ID 310a and the line information 620. As the most intuitive implementation example, a method of mapping the line information 620 to the bits <1 to 0> and mapping the Req ID to bits <18 to 2> of the interrupt identifier 328a by using a TAP circuit is conceivable. If a large number of PCI buses are not used on the server hardware 150, then, for example, only several low-order bits of the Req ID 310a may be used as an identifier. The INTx table base 234 is added to the interrupt identifier 328a to calculate a target address 324a as a write position in the interrupt indicator 134.

The above-described example of address calculation is premised on an assumption that one byte is assigned to one interrupt identifier 328a, in order to simplify the description. As for writing of 4 bytes or less, a write position is specified by byte enable (BE) according to specifications of PCI express. Therefore, a suitable BE is generated by the subsequent indicator update unit 216. By the way, an embodiment in which a smaller assignment range (for example, 1-bit/interrupt identifier) is specified for one interrupt identifier 328a to decrease the memory occupation quantity of the interrupt indicator 134 is also conceivable. In that case, the interrupt relay circuit 140a conducts processing of reading out the interrupt indicator 134 atomically and updating it. Since a method for implementing both of them can be easily imagined by those skilled in the art, they are incorporated in the scope of the present invention.

On the other hand, as for write data, a value obtained by conducting bit inversion on the assert information 622 is taken out (write data 326a). The present data is expanded to a minimum unit (for example, one byte) of write data and finally written into the interrupt indicator. As a result of the present processing, "1" is set in a corresponding interrupt indicator in the case of an assert notice and the interrupt indicator is reset to "0" in the case of a deassert notice.

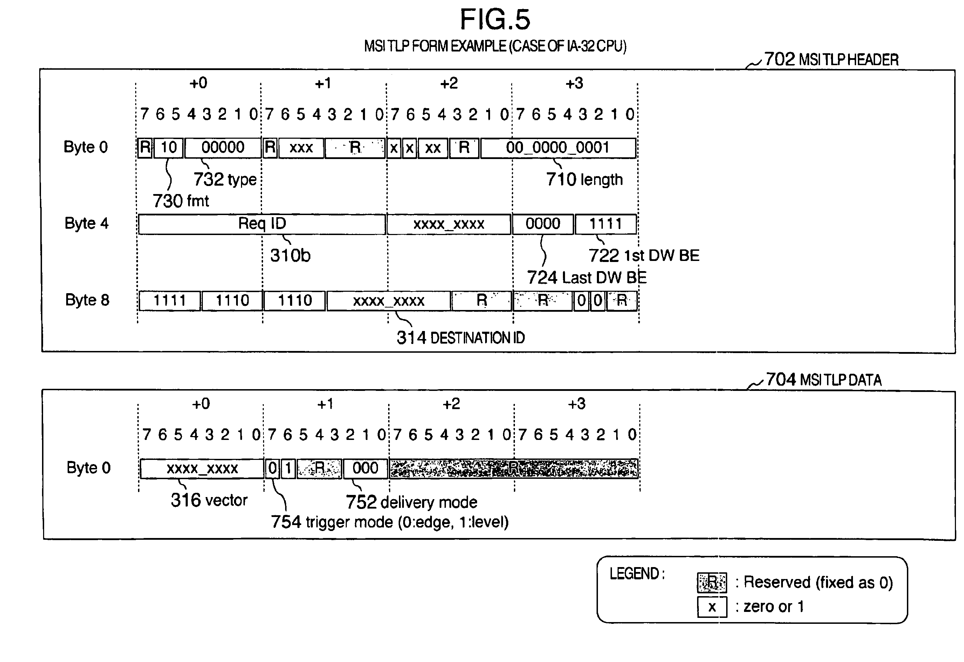

Contents of processing conducted by an MSI TLP processing unit 302 will now be described. The MSI TLP in an IA server is 4B MWr for a destination address FEEx_xxxxh. FIG 5 shows an MSI TLP format. The MSI TLP is formed of an MSI TLP header 702 and MSI TLP data 704. FIG 5 shows a case where a delivery mode 752 is "000b" (fixed). Whether to use another mode depends upon the chip set 130 and the VMM 114.

The MSI TLP processing unit 302 acquires the interrupt identifier 328b by referring to a Req ID 310b and a destination ID 314 contained in the TLP header and a vector 316 contained in the TLP data. In the same way as the interrupt identifier 328a, a plurality of embodiments are conceivable as to bit encoding of the interrupt identifier 328b. For example, a method of assigning a number of the vector 316 to bits <7 to 0> of the interrupt identifier 328b, the destination ID 314 to bits <15 to 8>, and the Req ID 310b to bits <31 to 16> is conceivable. As for the bit assignment of the Req ID 310b as well, a method of reducing the number of bits according to the number of PCI buses mounted on the server hardware 150 without assigning specific bits in the same way as the INTx message processing unit 300 is also conceivable.

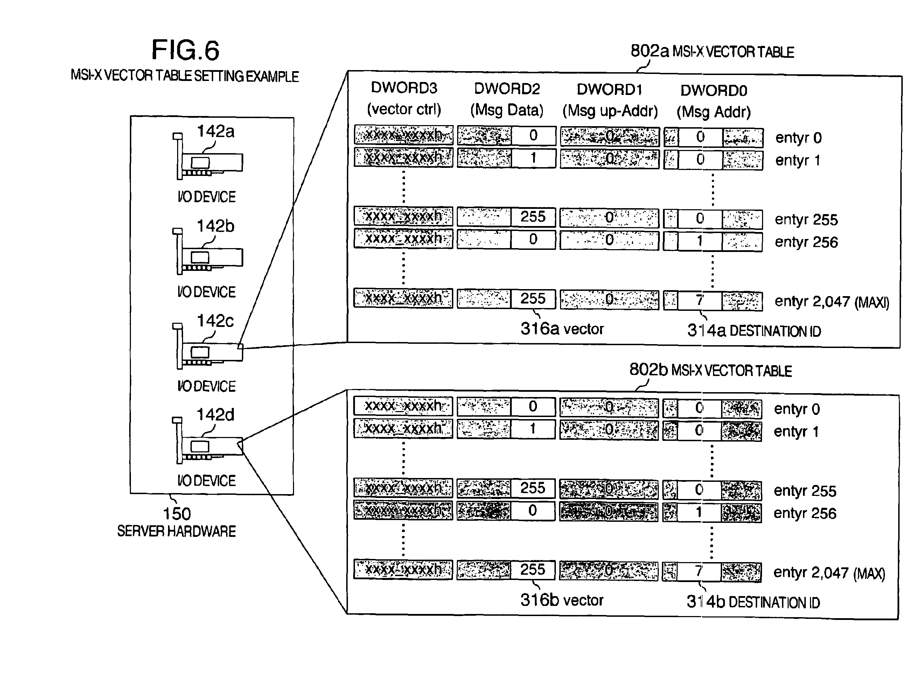

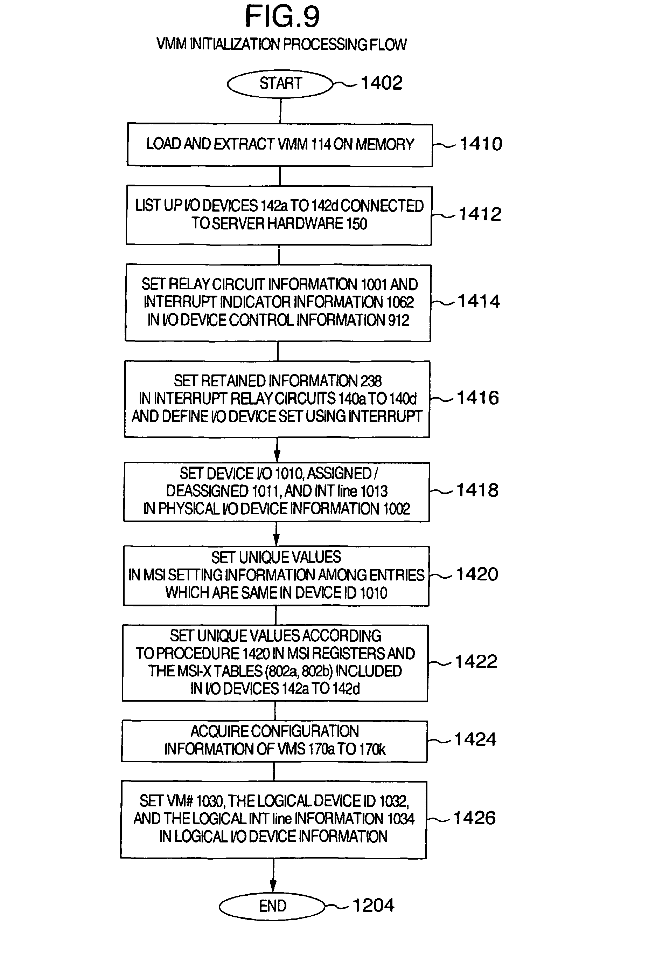

In the case where the interrupt relay circuits 140a to 140d according to the present invention are used, the VMM 114 can assign an arbitrary numeral regardless of the number of the CPU cores (1110a to 110d) mounted on the server hardware 150, in bit assignment of the destination ID 314. Because all MSI TLPs issued by the I/O device 142a are received and processed by only the interrupt relay circuit 140a, and consequently they are not recognized by the CPU cores. By using this property, the VMM 114 sets a number which is unique within the same PCI function, in an MSI-X vector register within the I/O device. An example of setting of an MSI-X vector table conducted by the VMM 114 is shown in FIG 6. A VMM initialization processing flow including a setting procedure of an MSI-X vector table will be described later with reference to FIG. 9.

As for the write data 326, a fixed value 1 is used. In the case of the MSI TLP, an edge interrupt is conducted in principle (a trigger mode 754 = 0) and consequently the interrupt indicator is set to 1 each time the interrupt Tx is given.

The address information (324a, 324b) and the write data information (326a, 326b) calculated by the INTx message processing unit 300 and the MSI TLP processing unit 302 are selected by a selector 330 and sent as the update request 224. At the same time, the notice request 226 is asserted.

A configuration of the interrupt sending unit 214 will now be described with reference to FIG 2C. The interrupt sending unit 214 refers to the MSI addr 228a and MSI data 228b in the retained information 238, and sends out the MSI TLP information 232 for generating the interrupt Tx to the CPU in synchronism with the notice request 226. An address 410, an fmt 412, a type 414, a length 416 and other accessory information 418 are contained in header information (420 header info.) of the MSI TLP. Bit encoding in the MSI TLP header is based upon FIG 5. As for bits <31 to 2> of the address 410, information of the MSI addr 228a is used, and two low-order bits are set to 0. As for the fmt 412, the type 414 and the length 416, information of the 4B MWr indicating the MSI TLP in the IA server is generated fixedly. The "other" 418 is omitted in description on account of apace consideration. As for data info. 422, the MSI data information 228b is used as it is. As a result of the present processing, an MSI TLP which is a second interrupt transition is generated on the basis of information set in 228a and 228b.

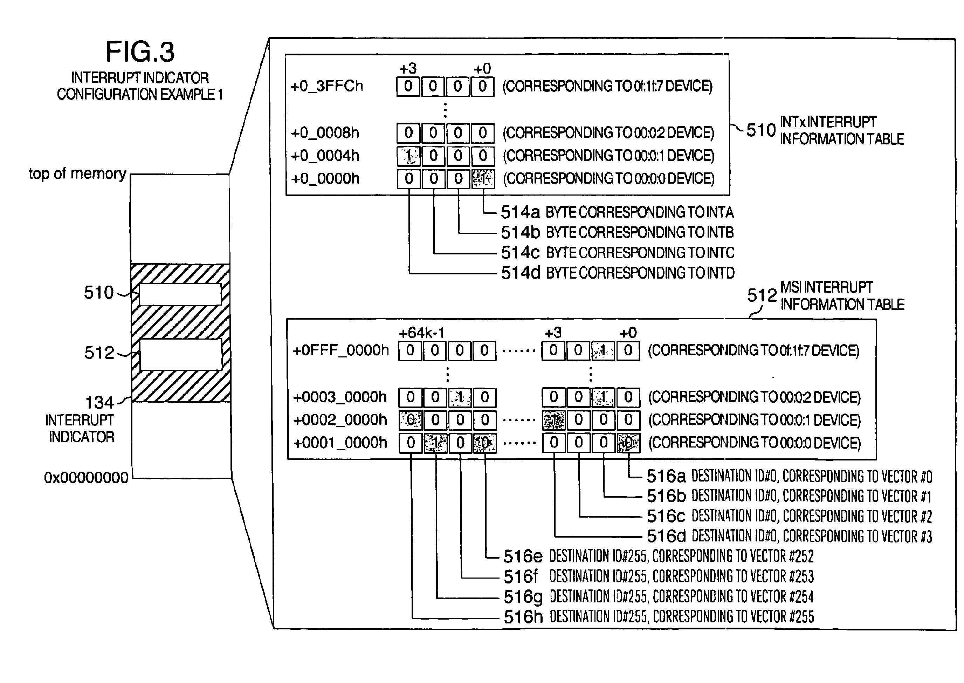

FIG 3 shows a configuration example of the interrupt indicator in the first embodiment. A form of a byte map table in which the interrupt indicator 134 is mapped onto a memory space is used in FIG 3. The interrupt indicator 134 internally retains an INTx interrupt information table 510 and an MSI interrupt information table 512. An example in which PCI bus numbers 0 to 0Fh are set as processing objects in both information tables is shown in FIG 3.

The INTx interrupt information table 510 is formed of a width of 4 bytes (2 bits) and a depth of 4,096 (12 bits) entries. Assert states of virtual wires respectively of the INTAB/C/D are stored in each entry in association with (PCI bus number: device number and function number) of the interrupt Tx issuer (514a to 514d). In each assert state, "0" indicates the deassert state and "1" indicates the assert state. Both the set processing and the reset processing are executed from the interrupt relay circuits 140a to 140d.

On the other hand, the MSI interrupt information table 512 is formed of a width of 64 kilobytes (16 bits) and a depth of 4,096 (12 bits) entries. Byte maps classified by the destination ID (8 bits) and vector number are formed in each entry in association with (PCI bus number: device number and function number) the interrupt Tx issuer (516a to 516h). In each assert state, "0" indicates the deassert state and "1" indicates the assert state. The set processing is conducted from the interrupt relay circuits 140a to 140d, and the reset processing is conducted from the VMM 114.

Prior to utilization of the MSI interrupt information table, the VMM 114 sets a unique value in MSI setting information retained by an I/O device in the system to uniquely identify the interrupt requester.

A setting example of the MSI-X vector table which retains information of the MSI will now be described with reference to FIG 6. FIG 6 shows the vector table setting of only the MSI-X, which is expanded specifications of the MSI. The MSI has specifications corresponding to a subset having only one set of setting registers. Since the configuration of the MSI vector table can be analogized by those skilled in the art, its detailed description will be omitted.

The I/O devices 142c and 142d respectively retain MSI-X vector tables 802a and 802b each formed of a plurality of sets each having an MSI addr register and an MSI data register. FIG 6 shows an example of a case where two PCI devices having 2,048 entries which is the maximum number of vector table entries of the MSI-X are mounted on the server hardware 150. Hereafter, the setting information will be described paying attention to the part of the I/O device 142c.

A destination ID 314 and a vector 316 are retained in the MSI register in the MSI-X vector entry. When the I/O device 142c issues an MSI TLP, a set value in the destination ID 314 shown in FIG 6 is reflected to the destination ID 314 shown in FIG. 5 and a set value in the vector 316a shown in FIG 6 is reflected to the vector 316 shown in FIG. 5. The VMM 114 assigns a unique number to an MSI-X vector entry in the PCI function identified by (PCI bus number: device number and function number). In the example shown in FIG 6, 0 to 7 are uniquely assigned to the destination ID 314a of a total of 2,048 entries, and 0 to 256 are uniquely assigned to the vector 316a of the 2,048 entries. As a result of the present setting, it becomes possible to assign an address of an individual interrupt indicator 134 to each of entries in the MSI-X table and the VMM 114 can uniquely discriminate the interrupt requester by referring to the MSI-X table entry level. In the present embodiment, a maximum of 65,536 MSI-X entries can be distinguished for a single PCI function.

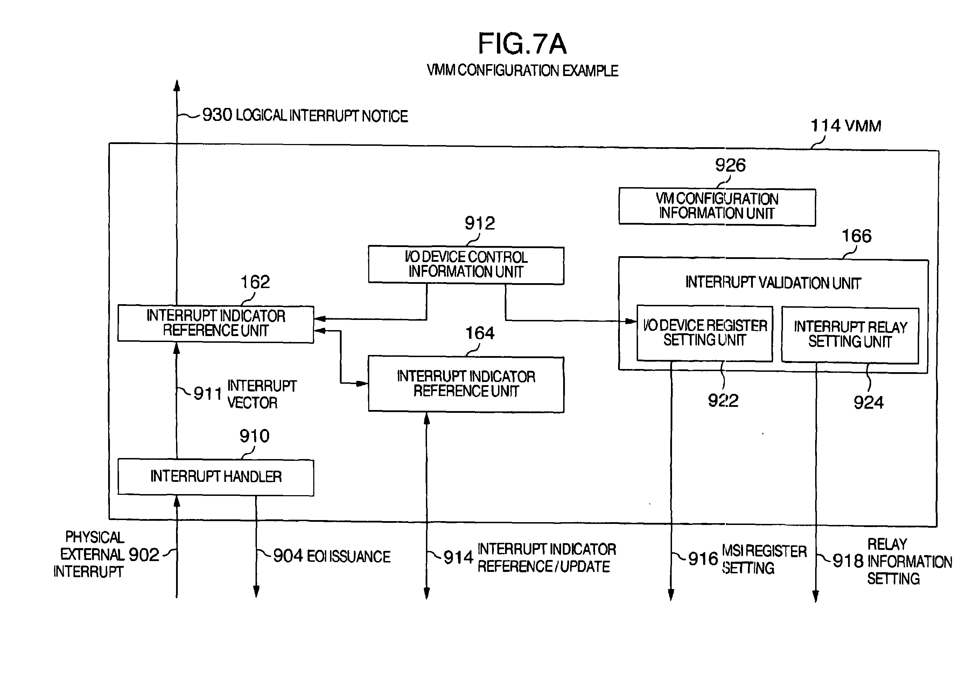

An example of an internal configuration of the VMM 114 will now be described with reference to FIG 7A. The VMM 114 includes an interrupt handler 910 which is started in response to a physical external interrupt 902, the interrupt distribution unit 162 which distributes received interrupts to the VMs 170a to 170k, an I/O device control information unit 912, the interrupt indicator reference unit 164, the interrupt validation unit 166, and a VM configuration information unit 926. As for each of the function blocks in the VMM, a plurality of implementation configurations are conceivable. For example, a configuration in which the interrupt indicator reference unit 164 is incorporated in the interrupt distribution unit 162 is conceivable. All of the configurations are in the scope that developers of software including the VMM can imagine easily, and are incorporated in the scope of the present invention.

The interrupt handler 910 gives a notice of an external interrupt vector 911 to the interrupt distribution unit 162, and conducts EOI issuance 904 after completion of interrupt processing. The interrupt distribution unit 162 conducts interrupt indicator reference/update 914 via the I/O device control information unit 912 and the interrupt indicator reference unit 164.
The interrupt distribution unit 162 determines a VM of the interrupt notice destination on the basis of a result of the reference, and gives a logical interrupt notice to the pertinent VM (930).

The interrupt validation unit 166 includes an I/O device register setting unit 922 and an interrupt relay circuit setting unit 924. Both of them are used at the time of initialization of the VMM, and they are submodules for setting the MSI-X vector tables included in the I/O devices 142a to 142d and the retained information 238 which is included in the interrupt relay circuits 140a to 140d. An initialization processing flow of the VMM 114 including the interrupt validation unit 166 will be described later with reference to FIG 9.

The VM configuration information unit 926 is a submodule for retaining information of assigned memory region, CPU and I/O resources for each of the VMs 170a to 170k. Implementation means of the present module is self-evident for those skilled in the art, and it will not be described in detail.

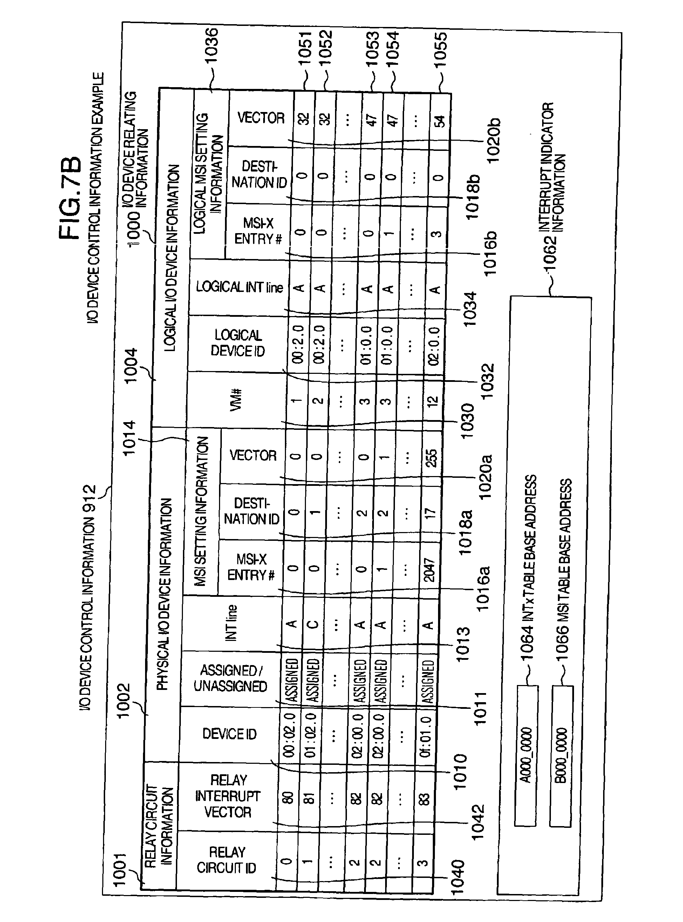

FIG 7B shows a setting example of the I/O device control information unit 912. The I/O device control information unit 912 retains I/O device relating information 1000 and interrupt indicator information 1062.

The I/O device relating information 1000 includes association information such as relay circuit information 1001, physical I/O device information 1002, and logical I/O device information 1004. The relay circuit information 1001 includes a relay circuit ID 1040 and a relay interrupt vector 1042. The VMM sets an individual relay interrupt vector 1042 in association with a relay circuit ID 1040. The interrupt distribution unit 162 receives the relay interrupt vector 1042 via the interrupt vector 911.

The physical I/O device information 1002 retains a device ID 1010, assigned/unassigned 1011, an INT line 1013, and MSI setting information 1014. All of them are used to identify a reference/update object of the interrupt indicator. In other words, when referring to the INTx interrupt information table 510 in the interrupt indicator 134, all entries in which a number notified in the interrupt vector 911 coincides with the relay interrupt vector 1042 and the assigned/unassigned 1011 is "assigned" are taken out, and a corresponding indicator location is identified by using the device ID 1010 (corresponding to the Req ID 310a) and the INT line 1013 (corresponding to the line information 620).

When referring to the MSI interrupt information table 512, an interrupt indicator location is identified by using the MSI setting information 1014. The MSI setting information 1014 includes a destination ID 1018a (corresponding to the destination ID 314) and a vector 1020a (corresponding to the vector 316).

In the I/O device relating information 1000, logical I/O device information 1004 is retained in association with the relay circuit information 1001 and the physical I/O device information 1002. The logical I/O device information 1004 includes a VM# 1030, a logical device ID 1032, a logical INT line 1034 and logical MSI setting information 1036. If the interrupt indicator is set, the VM (170a to 170k) of an interrupt transfer object and notice information are determined on the basis of the logical I/O device information 1004. As for a method for giving a notice of an interrupt to each VM, a plurality of methods such as branching to an external interrupt handler in the guest OS (172a to 172k) conducted by the VMM and an interrupt injection function using VT (Virtualization Technology) mounted on the IA-32 CPU are conceivable. All of the methods can be implemented in the existing VM and they will not be described in detail on account of space consideration.

The interrupt indicator information 1062 retains information of an INTx table base address 1064 and an MSI table base address 1066. The VMM 114 identifies a location of an interrupt indicator to be referred to, by using the information.

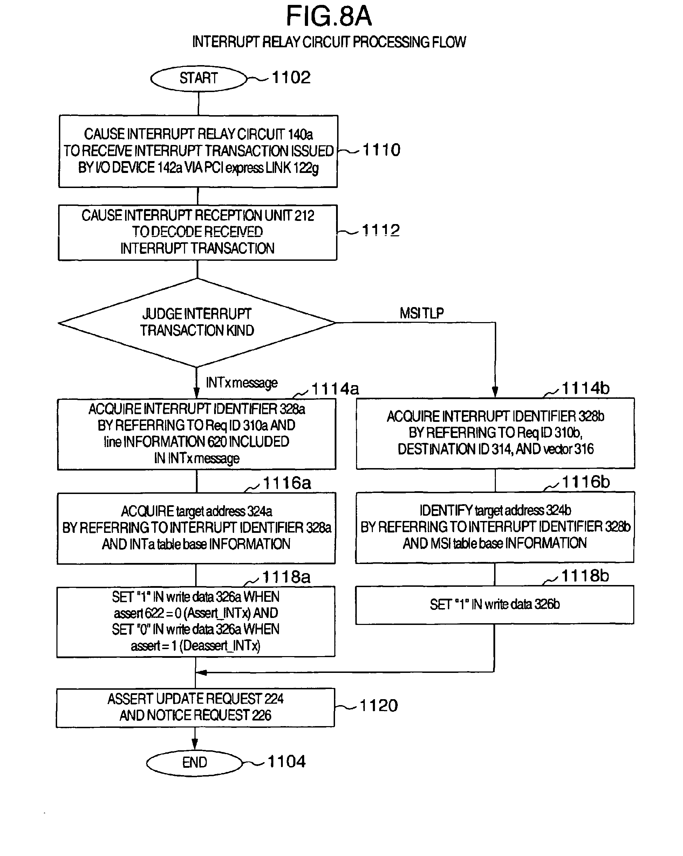

FIG 8A shows a processing flow of the interrupt relay circuit by taking 140a as an example. At processing step 1110, the interrupt relay circuit 140a receives an interrupt Tx issued by the I/O device 142 via the PCI express link 122g. Then, the interrupt reception unit 212 decodes the received interrupt Tx (1112). If the Tx kind is an INTx message, processing of 1114a to 1118a is executed. If the Tx kind is an MSI TLP, processing of 1114b to 1118b is executed.

If an INTx message is received, the interrupt identifier 328a is acquired by referring to the Req ID 310a and the line information 620 included in the INTx message at step 1114a. As for the method for calculating the interrupt identifier 328a, it is conceivable, for example, to assign the line information 620 to bits <1 to 0> of the interrupt identifier and the Req ID to bits <17 to 2>. Then, the target address 324a is acquired by referring to the acquired interrupt identifier 328a and the INTx table base 234 (1116a). In the present processing, for example, the interrupt identifier 328a and the INTx table base 234 are added together. Then, data to be written into the interrupt indicator is determined by referring to the assert information 622 at step 1118a. In the present example, the write data 326a is set to assume "1" when the assert 622 = 0 indicating the Assert_INTx message and assume "0" when the assert 622 = 1.

On the other hand, if an MSI TLP is received, the interrupt identifier 328b is acquired by referring to the Req ID 310b, the destination ID 314, and the vector 316 at step 1114b. As for a method for calculating the interrupt identifier 328b, it is conceivable, for example, to assign the vector 316 to bits <7 to 0> of the interrupt identifier 328b, the destination ID 314 to bits <15 to 8> and the Req ID 310 to bits <31-16>. The target addr 324b is identified by referring to the interrupt identifier 328b and the MSI table base 236 at step 1116b. In the present processing, for example, the interrupt identifier 328b and the MSI table base 236 are added together. At subsequent processing step 1118b, "1" is set in the write data 326b.

Finally, at step 1120, the update request 224 and the notice request 226 are asserted. The indicator update unit 216 is requested to generate the MWr TLP information, and the interrupt sending unit 214 is requested to generate the MSI TLP information 232.

Then, in a CPU which has received the interrupt (MSI TLP) from the interrupt relay circuit (140a), the VMM 114 is started. FIG 8B shows a processing flow in the VMM which has received the interrupt. At processing step 1210, one of the CPU cores 110a to 110d receives the physical external interrupt 902 and the interrupt handler 910 is started.

The interrupt handler 910 identifies the interrupt vector 911 (1212), and notifies the interrupt distribution unit 162 of the interrupt vector 911. The interrupt distribution unit 162 identifies an information entry (1051 to 1056) corresponding to the relay interrupt vector 1042 by referring to the I/O device information 912 (1214).

A plurality of information entries 1051 to 1056 correspond to the same interrupt vector 911 in some cases. In that case, processing steps 1216 to 1220 described later are executed as many times as the number of object entries. Only in the case where processing of all entries is completed, a decision 1224 is affirmed.

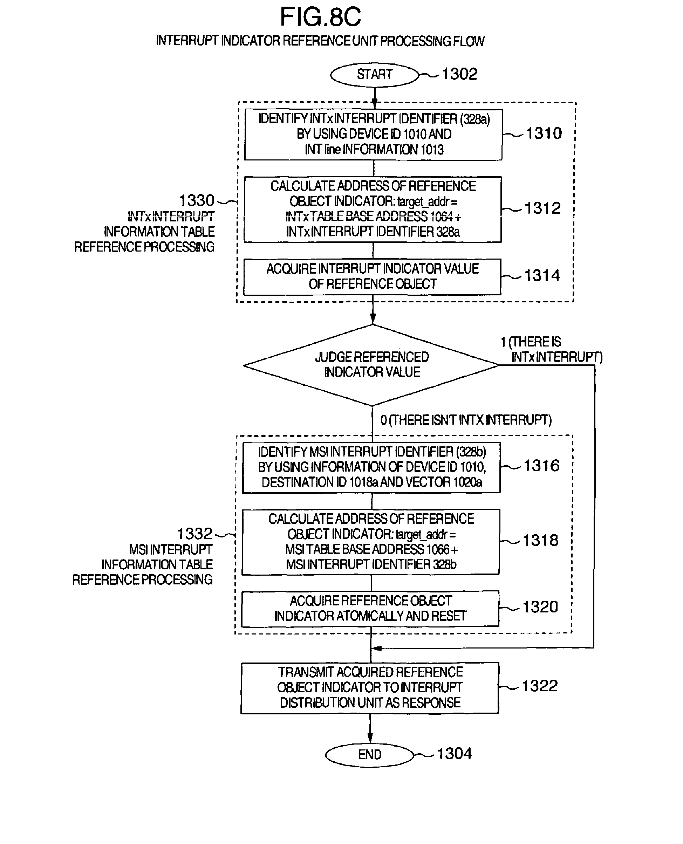

Then, at the processing step 1216, the interrupt distribution unit 162 calls the interrupt indicator reference unit 164 (subroutine call), and acquires a corresponding interrupt information indicator. Contents of the processing at the step 1216 will be described later with reference to FIG 8C. If the acquired interrupt indicator value is "1", processing at the processing steps 1217 to 1220 is conducted successively. On the other hand, if the acquired interrupt indicator value is "0", the processing at the processing steps 1217 to 1220 is skipped and the processing proceeds to the step 1220.

At the processing step 1217, the interrupt distribution unit 162 calls the interrupt indicator reference unit 164 and conducts processing. At the processing step 1217, the device ID 1010 included in the I/O device relating information 1000 is acquired and the interrupt issuer I/O device is identified. For example, if an interrupt indicator corresponding to the entry 1051 is set to "1", then it is appreciated on the basis of the device ID 1010 that the INTA line is asserted (1013) from a physical I/O device of (00:02.0) or an MSI TLP caused by 0th MSI-X entry is issued.

At processing step 1218, a corresponding VM 170a to 170k is identified by referring to the logical I/O device information 1004 and the logical interrupt is transferred to the VM. For example, if the interrupt indicator corresponding to the entry 1051 is set to "1", then it can be judged that the notice destination VM number is 1 (see VM# 1030), the corresponding logical device ID 1032 is (00:2.0), and the virtual interrupt line by the INTx is A (1034). In the case of an OS using an MSI, it can be judged on the basis of the logical MSI setting information 1036 that the MSI-X entry of the logical I/O device is 0th, the destination ID 1018b is 0, and the vector 1020b is 32.

Then, at the processing step 1220, the processing object is advanced to the next information entry. If there is an information entry which is not completed in the entries of processing object at decision step 1224, then the processing returns to the step 1216 to continue the processing. If all entries are finished in processing, then the processing proceeds to end (1204).

A processing flow of the interrupt indicator reference unit 164 in the processing step 1216 will now be described with reference to FIG 8C. The present processing flow is broadly divided into a processing part (1330) for referring to the INTx interrupt information table and a processing part (1332) for referring to the MSI interrupt information table.

In the PCI, it is prescribed to use the INTx interrupt and the MSI interrupt exclusively. In the present processing, only one of them is referred to. In the example shown in FIG 8C, the INTx interrupt information table is referred to earlier in the processing group 1330, and the processing group 1332 is executed if an interrupt indicator caused by INTx is not set. As for a method for implementing the present processing, a plurality of methods are conceivable. Both the INTx interrupt information table and the MSI interrupt information table may be referred to, or only one of them may be referred to on the basis of register information which is set in the I/O devices 142a to 142d. Both methods are within a scope that those skilled in the art can imagine easily, and they are in the scope of the present invention.

As for the INTx interrupt information table reference processing 1330, the INTx interrupt identifier (328a) is first identified by using the device ID 1010 and the INT line information 1013 at processing step 1310. Bit assignment of the INTx interrupt identifier 328a is based upon the TAP logic shown in FIG 2B. Then, at processing step 1312, an address of a reference object indicator is calculated from the interrupt identifier. Finally, an interrupt indicator value of the object is acquired at processing step 1314. As for acquisition, an ordinary load/store instruction can be used. If the acquired interrupt indicator value is "1" (there is an INTx interrupt), the processing is finished. If the acquired interrupt indicator value is "0" (there isn't an INTx interrupt), the processing proceeds to the processing group 1332.

In the MSI interrupt information table reference processing I332, the MSI interrupt identifier 328b is first calculated by using information of the device ID 1010, the destination ID 1018a and the vector 1020a at processing step 1316. Bit assignment of the MSI interrupt identifier 328b is based upon the TAP logic shown in FIG 2B. Then, at processing step 1318, an address of a reference object indicator is calculated from the interrupt identifier. Finally, a reference object indicator is acquired atomically and reset at processing step 1320.

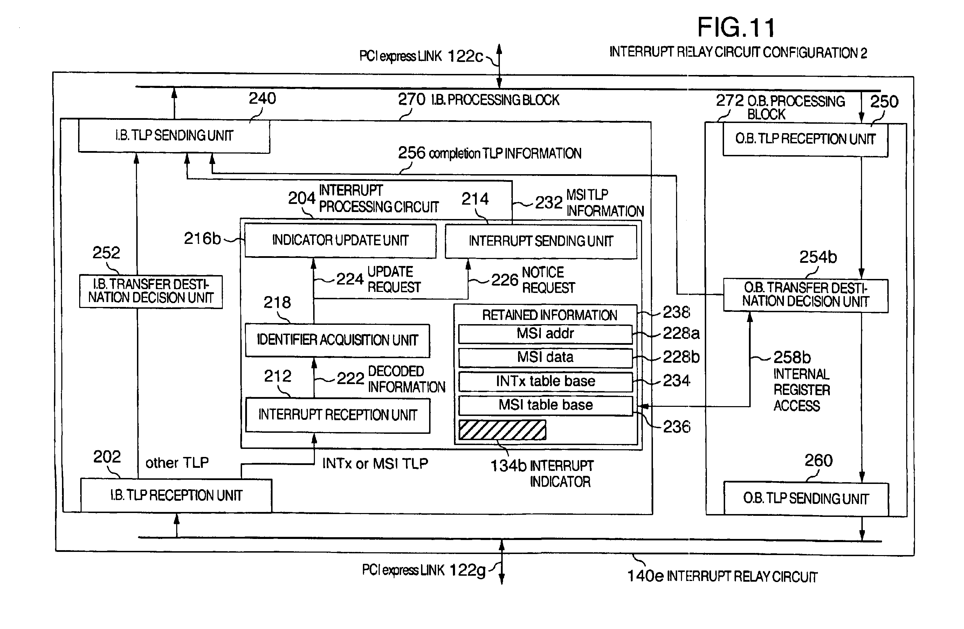

In the configuration in which the interrupt indicator 134 is included in the memory 132 in the first embodiment, the present processing can be implemented by using a comparison exchange instruction with lock (lock cmpxchg). On the other hand, in a configuration in which the interrupt indicator 134b is included in the interrupt relay circuit 140e in a second embodiment which will be described later, the present processing can be implemented by using an ordinary load instruction (mov) or I/O instruction (in). This is conducted for the O.B. transfer destination decision unit 254b to reset the object in synchronism with readout of the interrupt indicator 134b, as described later with reference to FIG 11.

At processing step 1322, acquired information of the reference object indicator is transmitted to the interrupt distribution unit as a response.

FIG 9 shows an initialization processing flow of the VMM 114 concerning the present invention. Only a processing part concerning the interrupt relay circuits 140a to 140d is shown in FIG 9 on account of space consideration.

At processing step 1410, the VMM 114 is loaded and extracted on the memory. The VMM loading may be executed by using a dedicated loader program, or may be implemented as one function of the OS.

At processing step 1412, the VMM 114 lists up the I/O devices 142a to 142d connected to the server hardware 150.

At processing step 1414, relay circuit information 1001 and interrupt indicator information 1062 in the I/O device control information unit 912 are set. In setting the present information, the VMM 114 secures a dedicated memory region which is different from resources assigned to each VM (170a to 170k).

At processing step 1416, the retained information 238 in the interrupt relay circuits 140a to 140d is set and an I/O device set using an interrupt is defined. It is supposed in the first embodiment that all I/O devices 142a to 142d use an interrupt.

At processing step 1418, setting of the device I/D 1010, the assigned/deassigned 1011, and the INT line 1013 in the physical I/O device information 1002 is conducted as regards the I/O devices using the interrupt.

At processing step 1420, unique values are set in the MSI setting information 1014 among entries which are the same in device ID 1010. For example, entries 1053 and 1054 in FIG 7B retain setting information to different MSI-X entries in the PCI devices having the same ID (02:00.0). In order to distinguish the MSI-X entries from each other, different vector numbers 1020a are given.

At processing step 1422, the unique setting values given to the MSI setting information 1014 at the processing step 1420 are set in the MSI registers and the MSI-X tables (802a, 802b) included in the I/O devices 142a to 142d. As a result of the present processing, the interrupt of each I/O device is validated and it becomes possible for the interrupt relay circuits 142a to 142d to distinguish the PCI devices of interrupt issuer uniquely with the MSI-X table entry level.

At processing step 1424, configuration information of the VMs 170a to 170k is acquired. At processing step 1426, setting of the logical I/O device information is conducted at processing step 1426. Setting objects at the time of VM initialization are the VM# 1030, the logical device ID 1032, and the logical INT line information 1034. Since the logical MSI setting information 1036 is set after booting of the guest OSes 172a to 172k, it does not become the object in the present flow.

According to the configuration and processing procedure in the first embodiment described heretofore, an interrupt relay circuit provided between the I/O device and the CPU core calculates an identifier (interrupt identifier) of the interrupt requester such as an I/O device, transmits the calculated interrupt identifier to the CPU, and updates an interrupt indicator which is stored in the memory and which corresponds to the interrupt identifier. Since the CPU which has received an interrupt identifier starts the VMM and the started VMM reads an updated interrupt indicator in the memory, it becomes possible for the VMM 114 to generally identify the PCI function of the interrupt requester while utilizing the existing I/O devices 142a to 142d based upon the PCI express as they are.

### (Second Embodiment)

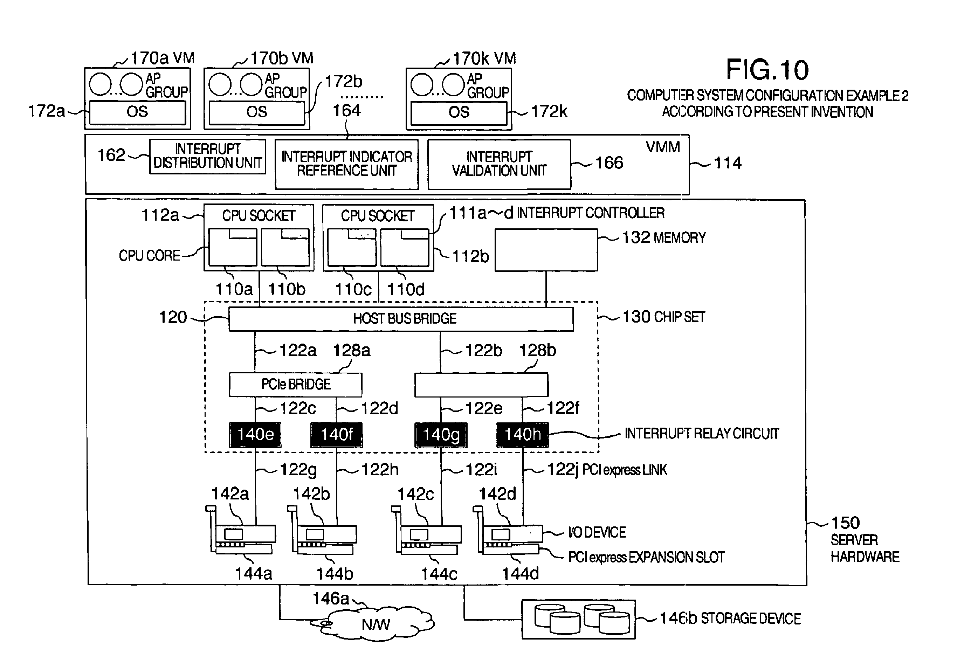

A second embodiment of the present invention will now be described with reference to accompanying drawings. FIG 10 is a configuration diagram of a computer system based upon the second embodiment. Unlike the first embodiment, the interrupt indicator is not provided in the memory 132, but the interrupt indicator is incorporated in the interrupt relay circuits 140e to 140h.

FIG 11 shows an example of a configuration of the interrupt relay circuit 140e according to the second embodiment. In the interrupt processing circuit 204, an interrupt indicator 134b is newly provided as the internal retained information 238. The interrupt indicator 134b is implemented by using storage elements such as flip-flops (FF), SRAMs and DRAMs, and is accessible from the CPU cores 110a to 110d. Unlike the first embodiment, the indicator update unit 216 updates directly the interrupt indicator 134b instead of generating the MWr TLP information.

At the time of access to the interrupt indicator 134b from the VMM 114 operating on the CPU, a request TLP is accepted by the O.B. processing block accepts and processed by the O.B. transfer destination decision unit 254. If the O.B. transfer destination decision unit 254 judges the destination to be the interrupt indicator 134, reading/writing is conducted via the internal register access 258b. If the access is judged in the present processing to be a read access to the MSI interrupt information table 512, the object is reset in synchronism with data return (generation of he completion TLP information 256). As a result of the present processing, atomic acquisition and reset of an interrupt indicator at the processing step 1320 in FIG 8C is implemented.

Owing to the configuration and processing procedure of the second embodiment described heretofore, it becomes possible for the VMM 114 to generally identify the PCI function of the interrupt requester while utilizing the existing I/O devices 142a to 142d based upon the PCI express as they are.

According to the configuration and processing procedure in the second embodiment described heretofore, an interrupt relay circuit provided between the I/O device and the CPU core calculates an identifier (interrupt identifier) of the interrupt requester such as an I/O device, transmits the calculated interrupt identifier to the CPU, and updates an interrupt indicator which is stored in an interrupt relay circuit and which corresponds to the interrupt identifier. Since the CPU which has received an interrupt identifer starts the VMM and the started VMM reads an updated interrupt indicator in the interrupt relay circuit, it becomes possible for the VMM 114 to generally identify the PCI function of the interrupt requester while utilizing the existing I/O devices 142a to 142d based upon the PCI express as they are.

It should be further understood by those skilled in the art that although the foregoing description has been made on embodiments of the invention, the invention is not limited thereto and various changes and modifications may be made without departing from the spirit of the invention and the scope of the appended claims as interpreted by the description and drawings.

## Claims

1. A computer apparatus comprising:
one or more CPUs (110a to 110d);
virtual machines (170a to 170k) generated on the CPUs;
a virtual machine monitor (114) for controlling the virtual machines;
a memory (132);
I/O devices (142a to 142d) which issue a first interrupt transaction;
relay circuits (140a to 140d) for connecting the CPUs, the memory and the I/O devices; and
an interrupt indicator retention unit for retaining an interrupt indicator which stores a reception situation of the first interrupt transaction,
wherein each of the relay circuits (140a to 140d) comprises:
an interrupt reception unit (212) for receiving the first interrupt transaction;
an identifier acquisition unit (218) for acquiring an identifier (328) which identifies an issuer of the first interrupt transaction, on the basis of information of the received first interrupt transaction;
an interrupt indicator update unit (216) for updating an interrupt indicator which corresponds to the acquired identifier; and
an interrupt sending unit (214) for giving a notice of a second interrupt transaction to the CPUs on the basis of reception of the first interrupt transaction in the interrupt reception unit,
the CPUs (110a to 110d) comprise interrupt controllers (111a to 111d) for calling the virtual machine monitor on the basis of reception of the second interrupt transaction, and
the virtual machine monitor (114) comprises an interrupt indicator reference unit for referring to the updated interrupt indicator on the basis of a call from the interrupt controller and identifying an I/O device which has issued the first interrupt transaction.

2. The computer apparatus according to claim 1, wherein
the virtual machine monitor (114) further comprises an interrupt distribution unit (162), and
the interrupt distribution unit (162) identifies a virtual machine (170) corresponding to the identified I/O device (142) by referring to an I/O device control information unit (912), and gives a notice of an interrupt of the I/O device to the identified virtual machine.

3. The computer apparatus according to claim 1, wherein
the first interrupt transaction is an Assert_INTx or Deassert_INTx message prescribed by PCI express, and
the interrupt indicator update unit (216) further comprises:
means for setting a corresponding indicator when the received first interrupt Tx is Assert_INTx, and
means for resetting the corresponding indicator when the received first interrupt Tx is Deassert_INTx.

4. The computer apparatus according to claim 3, wherein the identifier acquisition unit (218) further comprises means for acquiring a requester ID contained in the Assert_INTx or Deassert_INTx message, and all or a part of a virtual wire distinction (A to D) as an identifier.

5. The computer apparatus according to claim 1, wherein the first interrupt transaction is a Message Signaled Interrupt (MSI) prescribed by PCI express, and
the interrupt indicator update unit (216) further comprises means for setting a corresponding indicator.

6. The computer apparatus according to claim 5, wherein the identifier acquisition unit (218) further comprises means for acquiring all or a part of a requester ID contained in the MSI, ID information of a destination CPU, and an interrupt vector number, as an identifier.

7. The computer apparatus according to claim 5, wherein
each of the I/O devices (142a to 142d) comprises at least one MSI address register and data register prescribed by the PCI express, and
the virtual machine monitor (114) further comprises:
means for defining a set of I/O devices using an interrupt from among the I/O devices (142a to 142d); and
means for setting unique setting values in a pair of the MSI address and data register with respect to the set of I/O devices using the interrupt.

8. The computer apparatus according to claim 1, wherein
each of the relay circuits (140a to 140d) comprises:
an interrupt reception unit (212) for receiving the first interrupt transition, decoding the received first interrupt transaction, and giving a notice of decoded information (222);
an identifier acquisition unit (218) for receiving the decoded information, acquiring an identifier which identifies an issuer of the first interrupt transition on the basis of the decoded information, and issuing an update request (224) and a notice request (226) on the basis of the decoded information;
an interrupt indicator update unit (216) for receiving the update request and updating an interrupt indicator (134) corresponding to the identifier; and
an interrupt sending unit (214) for receiving the notice request and giving a notice of a second interrupt transaction on the basis of the notice request,
the CPUs (110a to 110d) comprise interrupt controllers (111a to 111d) for receiving the second interrupt transaction and issuing a physical external interrupt (902) based on the second interrupt transaction, and
the virtual machine monitor (114) comprises an interrupt indicator reference unit (164) for referring to an interrupt indicator (134) on the basis of the physical external interrupt (902) and identifying an I/O device which has issued the first interrupt transaction.

9. The computer apparatus according to claim 1, wherein
the interrupt indicator retention unit is the memory (132), and
the interrupt indicator update unit (216) generates MWr TLP information (230) for updating the interrupt indicator (134) retained in the memory (132) to an interrupt indicator corresponding to the identifier in response to reception of the update request (224), and sends out the generated MWr TLP information (230) to the memory (132).

10. The computer apparatus according to claim 1, wherein
the interrupt indicator retention unit (134b) is retained in the relay circuits (140e to 140h), and
the interrupt indicator update unit (216) updates the interrupt indicator (134) retained in the interrupt indicator retention unit to an interrupt indicator corresponding to the identifier in response to reception of the update request (224).

11. An interrupt relay method in a computer apparatus comprising one or more CPUs (110a to 110d), virtual machines (170a to 170k) generated on the CPUs, a virtual machine monitor (114) for controlling the virtual machines, a memory (132), I/O devices (142a to 142d), and relay circuits (140a to 140d) for connecting the CPUs, the memory and the I/O devices,
wherein
the I/O devices (142a to 142d) issue a first interrupt transaction,
a reception situation of the first interrupt transaction in the relay circuits is stored in an interrupt indicator (134),
the relay circuits (140a to 140d) receive the first interrupt transaction, acquire an identifier (328) for identifying an issuer of the first interrupt transaction on the basis of information of the received first interrupt transaction, update the interrupt indicator (134) which corresponds to the acquired identifier; and give a notice of a second interrupt transaction to the CPUs on the basis of reception of the first interrupt transaction,
the CPUs (110a to 110d) call the virtual machine monitor (114) on the basis of reception of the second interrupt transaction, and
the virtual machine monitor (114) refers to the updated interrupt indicator on the basis of a call from the CPUs and identifies an I/O device which has issued the first interrupt transaction.

12. The interrupt relay method according to claim 11, wherein the virtual machine monitor (114) further identifies a virtual machine (170) corresponding to the identified I/O device (142) by referring to an I/O device control information unit (912), and gives a notice of an interrupt of the I/O device to the identified virtual machine.

13. The interrupt relay method according to claim 11, wherein
the first interrupt transaction is an Assert_INTx or Deassert_INTx message prescribed by PCI express , and
when updating the interrupt indicator (134) corresponding to the acquired identifier,
if the received first interrupt Tx is Assert_INTx, a corresponding indicator is set, if the received first interrupt Tx is Deassert_INTx, a corresponding indicator is reset.

14. The interrupt relay method according to claim 13, wherein when acquiring an identifier (328) which identifies an issuer of the first interrupt transaction, a requester ID contained in the Assert_INTx or Deassert_INTx message, and all or a part of a virtual wire distinction (A to D) are acquired as an identifier.

15. The interrupt relay method according to claim 11, wherein
the first interrupt transaction is a Message Signaled Interrupt (MSI) prescribed by PCI express, and
when updating the interrupt indicator (134) corresponding to the acquired identifier, a corresponding indicator is set.
